# EUROPEAN PATENT APPLICATION

(11) **EP 0 577 033 A1**
(43) Date of publication of application: **05.01.1994**
(21) Application number: 93110238.8
(22) Date of filing: 26.06.1993
(51) Int. Cl.: G01N 30/88, G01N 33/72

(54) **A stabilizing method for measurement values by high speed liquid chromatography**

(30) Priority: 30.06.1992 JP 172604/92
(71) Applicant: KYOTO DAIICHI KAGAKU CO., LTD., Kyoto-shi Kyoto-fu (JP)
(72) Inventor: Sugiyama, Koji, c/o Kyoto Daiichi Kagaku, Minami-ku, Kyoto-shi, Kyoto-fu (JP); Yamamoto, Hiroshi, c/o Kyoto Daiichi Kagaku, Minami-ku, Kyoto-shi, Kyoto-fu (JP)
(74) Representative: Selting, Günther, Dipl.-Ing.

(57) **Abstract**

The relationship of the variation in the elution of a specific component with respect to the change in an arbitrary analyzing condition is beforehand grasped, the retention time of the specific component of a measurement sample is measured under a certain analyzing condition. In the case where the retention time departs from a predetermined reference range, the most preferable analyzing condition is set at that time point in accordance with said relationship based on the retention time and the current analyzing condition and the set analyzing condition is renewed as the analyzing condition for the subsequent analysis. Furthermore, when the renewed analyzing condition does not fall within the allowable range, an abnormality notification may be arranged to be made. As the analyzing condition to be renewed, the changeover time of eluting solutions, the temperature of the column constant temperature bath or the flow rate of the liquid delivery pump is preferable.

## Description

### BACKGROUND OF THE INVENTION

### 1. Field of the Invention

The present invention relates to a stabilizing method for measurement values in conducting the quantitative analysis of a specific component in a measurement sample by the high-speed liquid chromatography.

### 2. Description of the Prior Art

In the quantitative analysis of a specific component in a measurement sample, for example, glycohemoglobin in the blood by the high-speed liquid chromatography, the chromatogram obtained by separating hemoglobin in a separation column is affected by various analyzing conditions and tends to become unstable. For example, the retention time of each component of hemoglobin is varied by the difference in the column, the change with time of the stuffing material of the column, the temperature of the eluting solution at the time of measurement, the flow rate of the eluting solution, the delicate temperature change of the column. When the retention time becomes unstable through changing in analyzing conditions, the separation rates of respective components in the chromatogram are varied, resulting in the decrease of measurement accuracy.

Therefore, conventionally in the analysis by the high-speed liquid chromatography, the analysis on the measurement sample has been started after first preparing a sample for optimization and optimizing various analyzing conditions such as the adjustments of the concentration of the eluting solution, change-over time thereof, feed rate thereof, the temperature of the constant temperature bath, the replacement of the column or the like. Furthermore, during the measurement sample analysis, the retention time of a specified component is monitored. Whenever the extraction time is over the allowable range, the optimization operation on analyzing conditions as referred to above has been effected.

However, the conventional optimization operation on the analyzing conditions is completely manual and requires repetitions by trial and error. Therefore, not only it is complicated and time-consuming but also requires a high degree of specialized knowledge and skill on the high-speed liquid chromatography. Furthermore, for this reason, there has been such a problem that the analysis of the measurement sample takes a long time.

### SUMMARY OF THE INVENTION

The present invention has been developed to solve the problems as referred to above, and an essential object thereof is to provide a stabilizing method for measurement values by the high-speed liquid chromatography which is capable of stabilizing measurement values and shortening the analyzing operation on the measurement sample through automatically effecting the optimization of the analyzing conditions.

In order to achieve the above described object, according to the present invention, there is provided a stabilizing method for measurement values by the high-speed liquid chromatography in which a measurement sample is transported to a separation column together with an eluting solution and a quantity of each component of the measurement sample eluted from the separation column is measured, the stabilizing method comprising the following steps of:
beforehand grasping the relationship of the variation in the elution of a specific component of a measurement sample with respect to the change in an arbitrary analyzing conditions;
measuring the retention time of said specific component of the measurement sample under a certain analyzing condition; and
in case of a departure of said retention time from a predetermined reference range, setting the most preferable analyzing condition at that time point in accordance with said relationship based on said retention time and the current analyzing condition for renewal as the analyzing condition for the subsequent analysis.

As the analyzing conditions to be renewed, the change-over time of eluting solution, the temperature of the column constant temperature bath, the flow rate of the delivery pump, etc. are preferable.

Furthermore, when said renewed analyzing conditions do not fall within the allowable range, it may be arranged to inform the operator of an abnormality.

### BRIEF DESCRIPTION OF THE DRAWINGS

These and other objects and features of the present invention will become clear from the following description taken in conjunction with the preferred embodiments thereof with reference to the accompanying drawings in which:
Fig. 1 is a schematic diagram showing an analyzing apparatus by the high-speed liquid chromatography wherein the method according to the present invention is carried out;
Fig. 2 is a flow chart showing the control operation by a micro computer; and
Fig. 3 is a chromatogram of hemoglobin and a time chart for change-over the eluting solution.

### DETAILED DESCRIPTION OF THE PREFERRED EMBODIMENTS

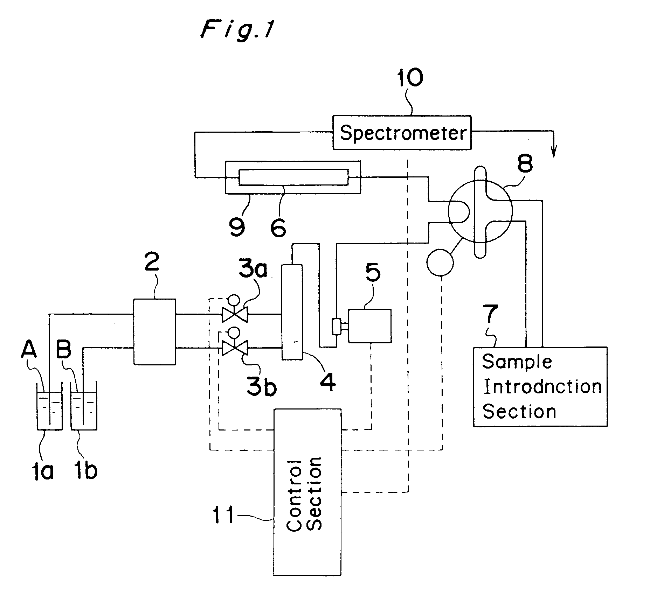

Fig. 1 is an analyzing apparatus for carrying out the method according to the present invention, in which the quantitative analysis of hemoglobin A1_{c} in the blood (hereinafter referred to merely as Hb A1_{c}) by the high-speed liquid chromatography method is carried out.

This analyzing apparatus is constituted by a liquid delivery pump 5 for feeding eluting solution in eluting solution liquid bottles 1ₐ and 1_{b} by sucking through a degas device 2, eluting solution change-over valves 3ₐ, 3_{b}, and a manifold 4, a separation column 6 arranged on the downstream side of the liquid delivery pump 5, a sample injection valve 8 arranged between the separation column 6 and liquid delivery pump 5 to inject a measurement sample (blood) from a sample introduction section 7 into the feed circuit, a constant temperature bath 9 enclosing the separation column 9, a spectrophotometer 10 arranged on the downstream side of the separation column 6 and a control section 11 for controlling the apparatus.

In the eluting solution bottles 1ₐ, 1_{b}, eluting solution A and B are respectively held. The eluting solutions A and B are phosphate buffer of different concentration. The elution capacity of eluting solution B with respect to Hb A1_{c} is larger than that of eluting solution A.

The eluting solution change-over valves 5ₐ, 5_{b} are controlled by the control section 11 so that either of them is always opened so as to feed either of the eluting solutions to the separation column 6. The manifold 4 gathers two liquid feeding pipes from eluting solution bottles 1ₐ, 1_{b} for connection to the liquid delivery pump 5.

The liquid delivery pump 5 is a pump of plunger type and feeds the eluting solution to the separation column 6 under a predetermined pressure of 30 to 200 kg/cm² range.

The sample injection valve 8 is a so-called 6-way valve and injects the sample (blood) introduced from the sample introduction section 7 into the eluting solution feeding circuit.

For the separation column 6, an ion exchange column or a reversed phase distribution column is employed.

The constant temperature bath 9 maintains the temperature of the separation column 6 at constant. The spectrophtometer 10 measures the extinction degrees of respective components eluting through separation by the separation column 6 with a measurement wavelength of 415 nm.

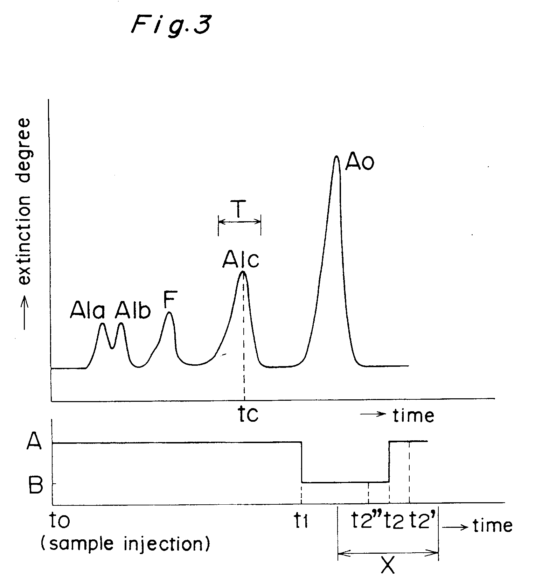

The control section 11 controls and operates each portion of the apparatus with a micro computer incorporated therein, and effects the optimization of the analyzing conditions. In the exclusive read-out memory of the control section, there is in advance stored a chart showing the relationship of the variation amount in the retention time of Hb A1_{c} with respect to the change in the analyzing condition. In the present embodiment, said analyzing condition is the change-over time t₂ (refer to Fig. 3) of switching the eluting solution change-over valve 3_{b} to the eluting solution change-over valve 3ₐ.

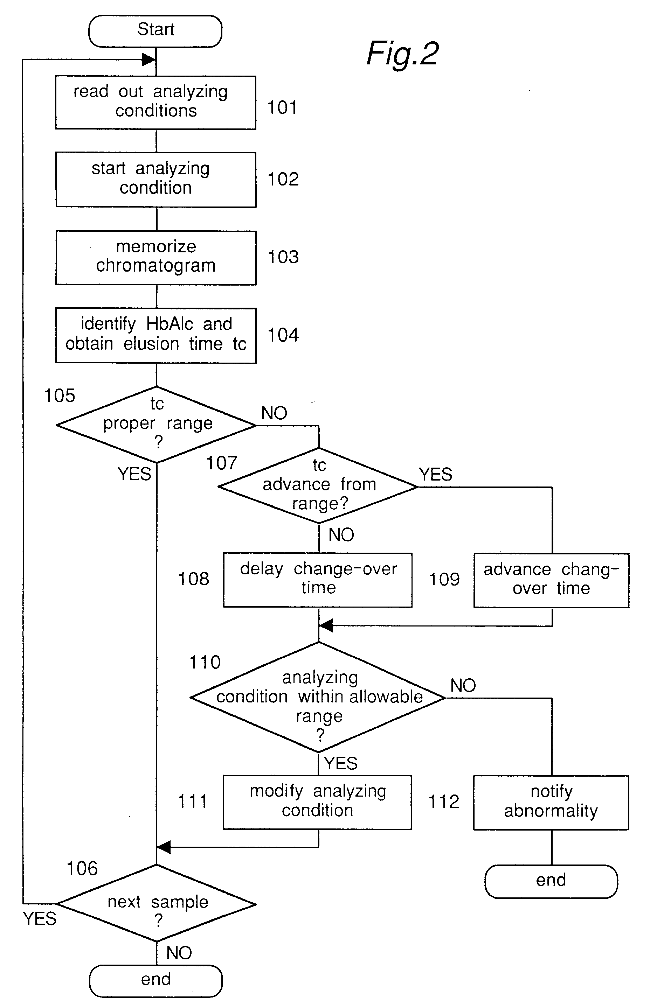

The operation of the analyzing apparatus constituted as referred to above will be described below in accordance with the flow chart shown in Fig. 2.

When the power source of the apparatus is put on and the start switch (not Shown) is depressed, the control section 11 first reads out, in Step 101, the analyzing conditions (previous conditions) stored in the rewritable memory. This analyzing conditions are the change-over time of eluting solution, the temperature of the column constant temperature bath, the flow rate of the liquid feeding pump, and so on. In the next Step 102, the analyzing operation is started by operating each portion under the read-out analyzing conditions.

More specifically, the control section 11 first opens the eluting solution change-over valve 3ₐ and drives the liquid delivery pump 5, whereby the eluting solution A in the eluting solution bottle 1ₐ is fed to the separation column 6 so that the eluting solution passes through the stuffing material therein. It is to be noted here that the eluting solution A is degassed by the degas device 2 before entering the separation column 6. After the stuffing material in the separation column 6 comes to the equilibrium, the control section 11 drives the sample injection valve 8 to inject the sample (blood) into the eluting solution A moving in the liquid feeding pipe. Thereby, the sample is transported to the separation column 6 together with the eluting solution A and separated while passing through the stuffing material so as to be eluted from the separation column in the order of A1ₐ, A1_{b}, F, and A1_{c}.

At a time point t₁ after elapse of a predetermined time from injecting the sample (time point t₀), the control section 11 closes the eluting solution change-over valve 3ₐ and opens the eluting solution change-over valve 3_{b} to feed the eluting solution B to the separation column 6. Thereby hemoglobin A₀ which is the remaining component of the sample is eluted. Subsequently, at a time point t₂ after elapse of a predetermined time, the control section 11 closes the eluting solution change-over valve 3_{b} and open the eluting solution change-over valve 3ₐ to feed the eluting solution A to the separation column 6 for effecting equilibration thereof.

Respective components of the sample eluting through separation in the separation column 6 are measured by the spectrometer 10 in respect of the extinction degree thereof and a chromatogram as shown in Fig. 3 is obtained.

After the analyzing operation as described above, the control section 11 memorizes, at Step 103, the chromatogram in the memory, and identifies, at Step 104, Hb A1_{c}. The identification of Hb A1_{c} can be made by finding the fourth peak of the extinction degree after injection (time point t₀) of the sample or the second peak from the last. After identifying Hb A1_{c} in this manner, the time from the time-point of the sample injection (t₀) to the time point of the peak point of extinction degree is obtained as the retention time of t_{c} of Hb A1_{c}.

In next Step 105, the control section 11 judges whether this retention time t_{c} falls within the proper range of the chromatogram of hemoglobin, and if it is within the proper range, it proceeds to Step 106 and when the next sample is present, it returns to Step 101 to repeat the analysis of the next sample in the same manner and if not present, it terminates the analysis.

In said Step 105, if the retention time t_{c} of Hb A1_{c} is not within the proper range, it judges, in Step 107, whether the retention time t_{c} is advanced or delayed from the proper range. Here, when the retention time t_{c} of Hb A1_{c} is delayed from the proper range T, the change-over time t₂ to the eluting solution A is delayed, in Step 108, to t₂' in accordance with the chart memorized beforehand in the exclusive read-out memory. Since the equilibration time of the column by the eluting solution A is thereby shortened and the eluting solution B which is easier to elute hemoglobin in the next analysis remains more in the separation column, the retention time t_{c} of Hb A1_{c} at the subsequent analysis is advanced so as to fall within the proper range T.

On the contrary, when the retention time t_{c} of Hb A1_{c} is advanced, the change-over time to t₂ the eluting solution A is advanced to t₂'' in Step 109. Thereby, the effect of the eluting solution B in the next analysis is reduced and the retention time t_{c} of Hb A1_{c} at the next analysis is delayed so as to fall within the proper range.

In next Step 110, the control section 11 judges whether or not the analyzing conditions (eluting solution change-over time) modified in said Step 108 or 109 are within the allowable range. Namely, in the case where the modified eluting solution change-over time t₂'' is extremely advanced so as to come close to t₁ or t₂' is very much delayed so as to come close to the next analysis starting time, since the stuffing material in the separation column 6 is considered to be deteriorated, the judgement of its life is effected here.

When the modified value of said analyzing condition (eluting solution change-over time) is within the proper range X, after modifying the eluting solution change-over time among the analyzing conditions to t₂' or t₂'' in Step 111, the operation process returns to Step 101 through 106, while when it is not within the allowable range X, an abnormality is notified in Step 112 with a buzzer, a lamp or the like so as to urge the operator to replace the separation column 6.

In the above-described embodiment, it is arranged to modify the change-over time from eluting solution B to eluting solution A among the analyzing conditions so that the retention time of Hb A1_{c} falls within the proper range, but the present invention is not limited to this but the modification of the flow rate of the liquid delivery pump 5 or the temperature of the separation column 6 may be applicable. Namely, in the case of the flow rate of the liquid delivery pump 5, when the retention time of Hb A1_{c} is advanced compared with the proper range, the flow rate is reduced and when it is delayed, the flow rate is increased. Meanwhile, in the case of the temperature of the separation column 6, when the retention time of Hb A1_{c} is advanced in comparison with the proper range, the temperature is reduced and when it is delayed, the temperature is increased.

As is clear from the foregoing description, according to a first aspect (Claim 1) of the present invention, since the analyzing conditions are modified to the optimum state at all times, the measurement accuracy is improved. Furthermore, since the optimization of the analyzing conditions is automatically effected, the optimizing operations complicated and requiring knowledge and skill of a high level which were conventionally made by operators before and during the analysis become unnecessary and the time required for the analysis of a measurement sample is shortened, resulting in the labor saving.

Furthermore, according to a second aspect (Claim 2) of the present invention, when a modified analyzing condition does not fall within the allowable range, it is arranged to notify the operator of an abnormality. Therefore, the operator can readily judge the life of the separation column by said notification before an error takes place in the measurement value, and can promptly take a proper measure such as the replacement of the separation column, etc.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A stabilizing method for measurement values by the high-speed liquid chromatography in which a measurement sample is transported to a separation column together with an eluting solution and a quantity of each component of said measurement sample eluted from said separation column is measured, said stabilizing method comprising the following steps of:
beforehand grasping the relationship of the variation in the elution of a specific component of a measurement sample with respect to the change in an arbitrary analyzing conditions;
measuring the retention time of said specific component of the measurement sample under a certain analyzing condition; and
in case of a departure of said retention time from a predetermined reference range, setting the most preferable analyzing condition at that time point in accordance with said relationship based on said retention time and the current analyzing condition for renewal as the analyzing condition for the subsequent analysis.

2. The stabilizing method for measurement values by the high-speed liquid chromatography as claimed in Claim 1, wherein when said renewed analyzing condition does not fall within the allowable range, notification of an abnormality is made.

3. The stabilizing method for measurement values by the high-speed liquid chromatography as claimed in Claim 1 or 2, wherein said measurement sample is body fluid.

4. The stabilizing method for measurement values by the high-speed liquid chromatography as claimed in Claim 3, wherein said measurement sample is blood.

5. The stabilizing method for measurement values by the high-speed liquid chromatography as claimed in Claim 4, wherein said specific component of measurement sample is hemoglobin.

6. The stabilizing method for measurement values by the high-speed liquid chromatography as claimed in Claim 1 or 2, wherein said analyzing condition is change-over time at which an eluting solution is changed over to another eluting solution.

7. The stabilizing method for measurement values by the high-speed liquid chromatography as claimed in Claim 1 or 2, wherein said analyzing condition is a flow rate of said eluting solution.

8. The stabilizing method for measurement values by the high-speed liquid chromatography as claimed in Claim 1 or 2, wherein said analyzing condition is a temperature of column constant temperature bath which maintains the temperature of said separation column at constant.
